# FASCICULE DE BREVET EUROPEEN

(11) **EP 2 438 341 B1**
(45) Date de publication et mention de la délivrance du brevet: **23.09.2015**
(21) Numéro de dépôt: 10724455.0
(22) Date de dépôt: 02.06.2010
(51) Int. Cl.: F16L 27/11, G21C 3/62, G21C 21/02, G21C 21/04

(54) **DISPOSITIF DE CONNEXION POUR SYSTÈME DE REMPLISSAGE DE JARRES POUR LA FABRICATION DE COMBUSTIBLE NUCLEAIRE**
VERBINDUNGSVORRICHTUNG FÜR EIN SYSTEM ZUM FÜLLEN VON BEHÄLTERN ZUR HERSTELLUNG VON KERNBRENNSTOFF
CONNECTION DEVICE FOR A SYSTEM FOR FILLING JARS FOR THE PRODUCTION OF NUCLEAR FUEL

(30) Priorité: 02.06.2009 FR 0953627
(43) Date de publication de la demande: 11.04.2012
(73) Titulaire: AREVA NC, 75009 Paris (FR)
(72) Inventeur: DUVAL, Patrice, F-30400 Villeneuve les Avignon (FR)
(74) Mandataire: Ilgart, Jean-Christophe
(86) Numéro de dépôt international: PCT/EP2010/057681
(87) Numéro de publication internationale: WO 2010/139712

(56) Documents cités:
- FR-A1- 2 308 855
- FR-A1- 2 562 309
- FR-A1- 2 834 768

## Description

### DOMAINE TECHNIQUE ET ART ANTÉRIEUR

La présente invention se rapporte à un dispositif de connexion pour système de remplissage de jarre avec des matériaux destinés à la fabrication de combustible nucléaire, en particulier pour la fabrication de pastilles de MOX (mélange de PuO₂ et d'UO2).

La fabrication de pastilles de MOX s'effectue de la manière suivante : les différents matériaux destinés à la fabrication des pastilles sont stockés séparément sous forme de poudre. Il s'agit de l'UO2, du PuO₂ et de chamotte. Ce mélange de poudres est ensuite compressé de sorte à former des pastilles, qui subiront par la suite une étape de frittage.

Le mélange est réalisé dans des jarres. Pour cela, on place une quantité donnée de chamotte dans la jarre, puis une quantité donnée de PuO₂ et enfin une quantité donnée de UO₂, l'UO2 pouvant être mis dans la jarre avant le PuO₂.

La mesure des quantités disposées dans la jarre est effectuée par pesage.

La manipulation de poudres d'oxydes de plutonium et d'uranium nécessite de grandes précautions du fait de leur toxicité. En particulier, lors de l'écoulement des poudres, celles-ci ont tendance à se disperser. Il est donc nécessaire de les confiner.

Le remplissage s'effectue en boîte à gant pour éviter tout risque d'échappement de poudre. Cependant, il faut éviter autant que faire se peut de contaminer les systèmes disposés dans la boîte à gant, ainsi que la surface extérieure de la jarre, celle-ci étant destinée à être emportée ailleurs pour la fabrication des pastilles. Un dispositif de connexion est prévu entre les réservoirs et la jarre.

Généralement, des couloirs vibrants sont utilisés pour acheminer la poudre des réservoirs au dispositif de remplissage. Les vibrations sont alors transmises au dispositif de remplissage. Par conséquent, afin de ne pas perturber les mesures par pesage, on évite le contact entre le dispositif de remplissage et la jarre.

Les dispositifs de remplissage existants comportent alors un tube de remplissage pénétrant dans le col de la jarre en évitant un contact avec celui-ci pour ne pas fausser les mesures de la balance de pesage, et mettent en oeuvre un confinement dynamique des poudres, i.e. une aspiration continue au niveau de l'espace entre le col de la jarre et le tube de remplissage, afin de collecter les poudres qui pourraient s'échapper.

Le dispositif est complexe. Il requiert une mise en place très précise afin d'éviter le contact avec la jarre tout en assurant un jeu très faible de l'ordre de quelques mm.

De plus, cette aspiration continue est obtenue par un système d'aspiration utilisant des filtres, qui naturellement s'encrassent au cours du temps. Ces filtres doivent être changés régulièrement pour maintenir l'efficacité du confinement, formant alors des déchets nucléaires qu'il faut gérer.

C'est par conséquent un but de la présente invention d'offrir un système de remplissage d'un récipient avec de la poudre pour la réalisation de combustible nucléaire dont la mise en oeuvre offre un dosage sûr et précis des quantités de poudre et réduit les déchets.

Un dispositif de raccordement étanche comportant une partie fixe et une partie mobile conforme au préambule de la revendication 1 est connu du document FR-2834768A.

### EXPOSÉ DE L'INVENTION

Le but précédemment énoncé est atteint par un dispositif de connexion d'un récipient avec des poudres comportant un conduit cylindrique destiné à venir en regard d'un orifice de remplissage du récipient sans contact avec les bords de l'orifice, une bague venant en contact avec le bord de l'orifice de manière étanche, ladite bague entourant le conduit de remplissage de manière étanche et étant mobile par rapport à celui-ci. La bague est mécaniquement découplée du conduit de remplissage afin de ne pas perturber le pesage lors du remplissage. Seule la bague d'étanchéité a alors à être prise en compte lors du pesage.

Ce dispositif assure un confinement étanche ne nécessitant pas de système d'aspiration. Par conséquent, aucun filtre n'est mis en oeuvre. La génération de déchets est donc supprimée.

Par ailleurs, ce dispositif ne nécessite pas une grande précision de positionnement par rapport au récipient. Par conséquent, les risques d'erreur dans la réalisation du mélange sont réduits.

En d'autres termes, on effectue une étanchéité statique entre le dispositif de connexion et le récipient, offrant un système sûr et robuste.

La présente invention a alors principalement pour objet un dispositif de connexion étanche entre un système d'alimentation en matériaux pulvérulents ou granulaires pour la fabrication de combustible nucléaire et un récipient muni d'un orifice de remplissage, ledit dispositif comportant :
- une partie de connexion fixe destinée à être raccordée au système d'alimentation,
- une partie de connexion mobile par rapport à la partie de connexion fixe destinée à être raccordée à l'orifice de remplissage du récipient,
la partie de connexion mobile comportant au niveau d'une extrémité aval au moins un moyen d'étanchéité pour réaliser une connexion étanche par contact avec les contours de l'orifice de remplissage et l'extrémité aval de la partie de connexion mobile étant connectée à la partie de connexion fixe par des moyens étanches et souples de sorte à assurer un découplage mécanique entre l'extrémité aval de la partie de connexion mobile et la partie de connexion fixe.

La partie de connexion fixe peut former une trémie collectrice des matériaux et dans laquelle la partie de connexion mobile comporte une bague support montée coulissante de manière étanche autour du conduit fixe et une bague d'étanchéité formant l'extrémité aval de la partie de connexion mobile, la bague d'étanchéité étant destinée à venir en contact étanche avec le contour de l'orifice de remplissage, la bague d'étanchéité et la bague support étant connectées par un soufflet étanche assurant le découplage mécanique entre la partie de connexion fixe et l'extrémité aval de la partie de connexion mobile.

De manière avantageuse, le dispositif de connexion étanche selon l'invention comporte des moyens pour limiter le déplacement en éloignement de la bague d'étanchéité par rapport à la bague support, lesdits moyens étant actifs lorsque la bague d'étanchéité n'est pas en contact avec le contour de l'orifice de remplissage et étant inactifs lorsque la bague d'étanchéité est en contact avec le contour de l'orifice de remplissage.

Les moyens de limitation comportent, par exemple des doigts radiaux et un épaulement en amont des doigts de sorte que, lorsque la bague d'étanchéité entre en contact avec le contour de l'orifice de remplissage, l'épaulement et les doigts s'écartent.

Le dispositif peut également comporter des moyens pour faire coulisser axialement la bague support par rapport à la partie de connexion fixe, par exemple des moyens de type vérin électrique.

Les moyens d'étanchéité portés par la bague d'étanchéité sont par exemple formés par un joint à lèvre monté dans une gorge.

Le soufflet est avantageusement monté sur la bague support au moyen d'une bride de montage, et les extrémités amont et aval du soufflet sont fixées sur la bride de montage et sur la bague d'étanchéité, respectivement, au moyen de colliers de serrage. Le remplacement du soufflet est donc aisé.

La bride de montage est par exemple solidarisée axialement à la bague support par un système à baïonnette.

La bague support se prolonge avantageusement par un conduit d'acheminement en direction de bague d'étanchéité, guidant la poudre jusqu'à l'orifice de remplissage du récipient, et protégeant le soufflet.

Des moyens d'étanchéité peuvent également être prévus entre le conduit d'acheminement et la trémie collectrice pour assurer un coulissement étanche.

Un orifice d'évent peut être prévu dans la bague support et communiquant avec l'intérieur du récipient par un passage délimité entre le soufflet et le conduit d'acheminement.

La présente invention a également pour objet un système de remplissage comportant des conduits d'alimentation en poudre, un dispositif de connexion étanche selon la présente invention, et un dispositif de pesée supportant le récipient, les conduits d'alimentation étant raccordés à la partie de connexion fixe.

Les conduits d'alimentation sont avantageusement du type couloir vibrant. Les couloirs vibrants peuvent être commandés de sorte à délivrer les matériaux avec une vitesse élevée au début du remplissage, puis à délivrer les matériaux à des vitesses plus faibles lorsque la quantité délivrée est proche de la quantité souhaitée.

Le système de pesée est avantageusement apte à rapprocher l'orifice de remplissage du récipient du dispositif de connexion étanche.

La présente invention a également pour objet un procédé de remplissage d'un récipient au moyen du système de remplissage d'un récipient selon la présente invention, comportant les étapes :
- mise en place du récipient en dessous du dispositif de connexion,
- pesage du récipient,
- rapprochement du dispositif de connexion étanche de l'orifice de remplissage du récipient,
- mise en contact de la bague d'étanchéité et du contour de l'orifice de remplissage de sorte à réaliser une connexion étanche,
- pesage de l'ensemble formé par le récipient et la bague d'étanchéité,
- arrivée du ou des matériaux.

Entre chaque remplissage par un matériau, la bague d'étanchéité est avantageusement écartée du contour de l'orifice de remplissage et le récipient avec son contenu est pesé.

### BRÈVE DESCRIPTION DES DESSINS

La présente invention sera mieux comprise à l'aide de la description qui va suivre et des dessins annexés sur lesquels :
- la figure 1 est une vue en coupe longitudinale du dispositif de connexion dans une position non connectée sur un récipient à remplir,
- la figure 2A est une vue en coupe longitudinale du dispositif de connexion dans une position de connexion sur le récipient,
- la figure 2B est une vue agrandie du dispositif de connexion de la figure 2A,
- la figure 3 est une vue de détail d'un composant du dispositif de la figure 1.

### EXPOSÉ DÉTAILLÉ DE MODES DE RÉALISATION PARTICULIERS

Une unité de fabrication de combustible nucléaire comporte un système de remplissage d'une jarre comportant un module de dosage comprenant plusieurs conduits d'acheminement de poudre jusqu'à un dispositif de connexion à une jarre. La jarre est disposée sur une balance et les différents dosages s'effectuent par pesée de la jarre. Lorsqu'un mélange de poudre est réalisé, la jarre remplie est remplacée par une jarre vide.

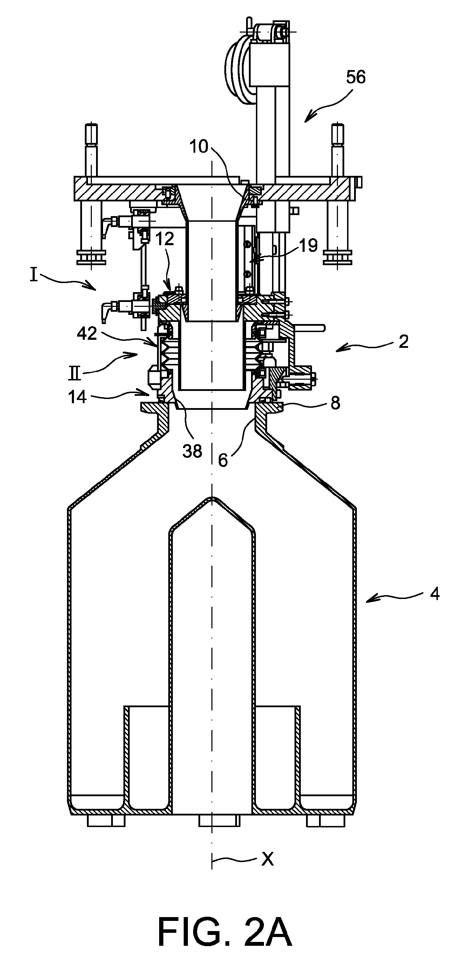

Sur la figure 2A, on peut voir un exemple de réalisation d'un dispositif de connexion 2 selon la présente invention disposé au dessus d'un récipient 4 dans lequel le mélange sera réalisé. Le récipient 4 est généralement appelé jarre.

La description utilisera comme exemple la réalisation d'un mélange de poudres de PuO₂ et de poudres d'UO2. Cependant la présente invention s'applique à tout type de poudre. On entend, par poudre dans la présente demande, un matériau sous de forme granulaire ou particulaire dont la taille peut atteindre par exemple environ 1 mm.

La jarre 4 comporte un orifice de remplissage 6 bordé par un col 8.

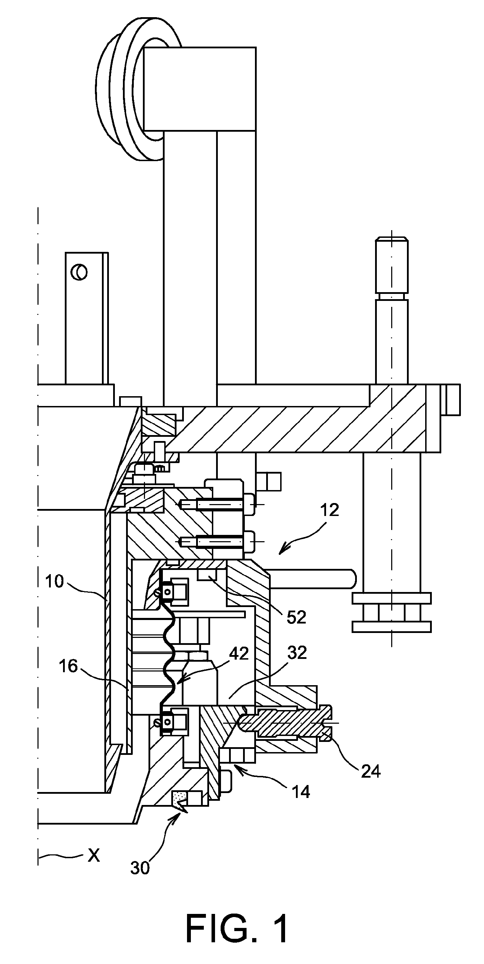

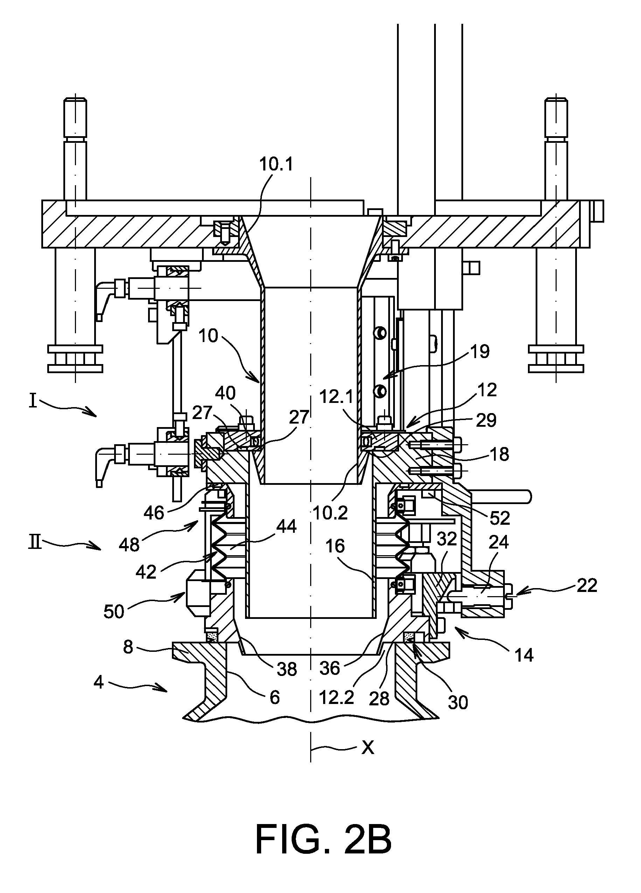

Le dispositif de connexion 2 représenté sur les figures 1, 2A et 2B, est destiné à être disposé entre une zone par laquelle sont acheminées les diverses poudres (non représentée) située en amont du dispositif de connexion et la jarre 4.

Le dispositif de connexion 2 présente sensiblement un axe longitudinal X.

L'axe longitudinal X est orienté sensiblement selon la direction d'écoulement des poudres.

La jarre 4 présente également un axe longitudinal, la jarre est disposée sous le dispositif de sorte que son axe soit sensiblement confondu avec l'axe X.

Selon la présente invention, le dispositif de connexion comporte une partie I destinée à être du côté de la zone d'arrivée des poudres, dite partie amont, destinée à être fixe par rapport à l'installation et une partie II du côté de la jarre 4, dite partie aval destinée à être mobile.

La partie amont I comporte une trémie collectrice 10 d'axe X dont une première extrémité longitudinale 10.1 est destinée à être disposée du côté de la zone d'acheminement des poudres, et une deuxième extrémité longitudinale 10.2 destinée à guider les poudres vers la jarre.

La partie aval II est disposée autour de la trémie 10 et est apte à se déplacer le long de l'axe X.

La partie aval II forme un équipage mobile composée d'une première pièce 12 formant support et une deuxième pièce 14 destinée à venir en contact avec le col 8 de la jarre 4.

La première pièce 12 comporte une extrémité longitudinale 12.1 amont et une extrémité longitudinale 12.2 aval. L'extrémité longitudinale aval 12.2 est destinée à venir en regard de l'orifice de remplissage 6 et à guider la poudre jusqu'à cet orifice 6.

La première pièce 12 comporte une bague support 18 se prolongeant par un conduit 16 aligné avec la trémie 10.

Le déplacement de la bague support 18 et du conduit d'acheminement 16 par rapport à la trémie est avantageusement facilité par une glissière à billes 19.

La première pièce 12 comporte au niveau de son extrémité aval des éléments de butée 22 en saillie radialement vers l'intérieur. Dans l'exemple représenté, ces éléments de butée sont formés par des doigts 24 s'étendant radialement vers l'intérieur.

La première pièce 12 peut comporter également un orifice d'évent pratiqué dans la bague support 18 au niveau de l'extrémité amont du conduit 16. Si le diamètre de la trémie 10 est suffisamment important, il n'y a pas de risque que le passage soit obstrué, les gaz présents dans la jarre remontant dans la trémie. Dans ce cas, le dispositif est complètement étanche.

L'extrémité aval 10.2 de la trémie collectrice 10 comporte un épaulement extérieur 27 coopérant avec une surface radiale 29 de la bague support 18, en saillie vers l'intérieur, de sorte à former une butée axiale pour le déplacement de la première pièce 12. Par ailleurs, ce contact forme une étanchéité métal sur métal. La surface radiale 29 est portée par un anneau amovible permettant le montage de la première pièce sur la trémie collectrice 20.

La deuxième pièce 14 a sensiblement la forme d'une bague et est destinée à être mobile le long de l'axe X par rapport à la première pièce 12.

La bague 14 comporte au niveau de son extrémité aval une face d'appui 28 destinée à venir s'appliquer sur la face plane du col 8 de la jarre 6. Cette face d'appui 28 comporte des moyens 30 réalisant un contact étanche entre la face d'appui 28 et le col de la jarre. Ces moyens 30, sont formés, dans l'exemple représenté, par un joint à lèvre monté dans une gorge réalisée dans la face d'appui 28.

Le bague d'étanchéité 14 comporte un épaulement 32 en saillie radialement vers l'extérieur en amont des doigts 24, coopérant avec les doigts 24 de sorte à former des moyens d'arrêt axiaux de la bague 14 par rapport au support 12, lorsque que la bague d'étanchéité 14 ne repose plus sur le col 8 de jarre.

Le passage intérieur 36 de la bague d'étanchéité 14 est muni, au niveau de son extrémité aval, d'un bec 38 de forme tronconique de sorte à dévier la poudre vers l'axe du conduit et à protéger le joint à lèvre 30.

Des moyens d'étanchéité 40 sont prévus entre la trémie collectrice 10 et la première pièce 12. Dans l'exemple représenté, il s'agit d'un joint monté dans la face intérieure du conduit 16 et frottant sur la face extérieure de la trémie 10.

Le joint 40 est tel qu'il supporte les frottements dus au coulissement du conduit d'acheminement 16.

En outre, des moyens d'étanchéité 42 sont prévus entre la première pièce 12 et la deuxième pièce 14.

Les moyens d'étanchéité 42 sont tels qu'ils assurent un découplage mécanique entre la bague support 12 et la bague d'étanchéité 14 et, plus particulièrement, entre la trémie collectrice 10 et la bague d'étanchéité 14 en contact avec la jarre.

En effet, l'acheminement des poudres s'effectue généralement au moyen de systèmes vibrants, type couloirs vibrants, ces vibrations faussent les pesées. Grâce à l'invention, ces vibrations ne sont pas transmises à la bague, et par conséquent ne sont pas transmises à la jarre 4.

Dans l'exemple représenté, les moyens d'étanchéité 42 sont formés par un soufflet souple s'étendant longitudinalement entre la face amont de la bague 14 et la face aval de la saillie radiale de la bague support 18. Le soufflet 42 présente l'avantage de se replier lorsque la deuxième partie II est en position haute et donc de ne pas gêner le déplacement relatif des première et deuxième parties. La forme en soufflet présente l'avantage de présenter une rémanence qui fluctue peu dans le temps, i.e. l'effort qu'il applique sur la jarre et donc sur la balance est sensiblement constant dans le temps. Cet effort peut donc être déduit lors de la mesure. A l'inverse, un manchon en matériau souple et compressible peut présenter une rémanence qui varie, ce qui peut faire varier l'effort d'appui sur la jarre et donc perturber la pesée.

On pourrait prévoir d'utiliser un élément souple de forme tubulaire ou ayant une autre section, cet élément étant choisi de sorte qu'il n'influe pas sur la pesée.

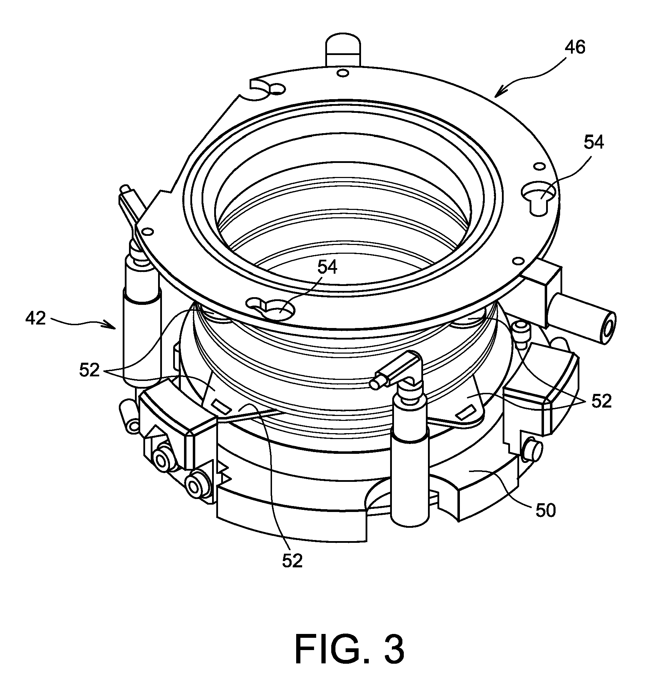

Sur la figure 3, on peut voir le soufflet 42 avec la bague 14 et une bride de montage sur la première pièce.

Le soufflet 42 est monté par une première extrémité amont sur une bride de montage 46 au moyen d'un collier de serrage 48 et la deuxième extrémité aval sur la bague d'étanchéité 14 au moyen d'un collier de serrage 50.

La connexion du soufflet 42 par une extrémité aval à la bague d'étanchéité 14 est particulièrement avantageuse, puisqu'elle permet au soufflet de servir de moyen de retenue pour la bague d'étanchéité. En effet, dans le cas où seul le soufflet retient la bague d'étanchéité 14, le déplacement de la bague d'étanchéité 14 est égal au plus à la longueur dépliée du soufflet. La course de la bague d'étanchéité est donc limitée et compatible avec le fonctionnement du dispositif.

La bride de montage 46 est elle-même solidarisée sur la première pièce.

Un joint est interposé entre la bride de montage 46 et la bague support 18.

Avantageusement, la bride de montage 46 peut être solidarisée et désolidarisée facilement de la première pièce, permettant ainsi un remplacement facilité du soufflet. Dans l'exemple représenté, les moyens de solidarisation sont du type à baïonnette. La première pièce comporte des ergots 52 formés d'une tige et d'une tête en saillie de la face aval de la première pièce, et la bague de montage 46 comporte des lumières 54 dont une section de plus petite largeur proche de celle du diamètre de la tige et une section de plus grande largeur proche du diamètre de la tête pour permettre leur insertion dans la lumière. Pour le montage, il suffit d'introduire les ergots dans les sections de plus grande largeur, puis de faire pivoter la bride de fixation 46 par rapport à la première pièce 12 autour de son axe de sorte à placer les ergots dans les sections de plus petite largeur.

Le soufflet 42 est alors solidarisé axialement à la première pièce 12.

Pour remplacer le soufflet 42, il suffit de faire pivoter en sens inverse la bride de montage par rapport à la première pièce.

L'usage des colliers de serrage présente l'avantage d'être de manipulation simple, rapide et d'offrir un serrage sûr. Cependant, on peut prévoir d'autres moyens de fixation.

Le soufflet comporte avantageusement à ses extrémités longitudinales des oreilles 56 faisant saillie radialement vers l'extérieur pour le montage du soufflet. Ces oreilles 56 permettent d'étirer le soufflet 42 pour le mettre en place dans les logements des pièces en interface. La présence de ces oreilles 56 facilite le montage du soufflet 42, étant précisé qu'il s'effectue à distance avec des prégants et des gants. On peut prévoir que les colliers soient montés dans des passants prévus dans les oreilles afin d'éviter que les colliers ne chutent dans la boîte à gant lors du montage.

Le conduit d'acheminement 16 s'étend avantageusement sur toute la longueur du soufflet déployé, protégeant celui-ci d'un contact excessif avec la poudre et évitant que de la poudre ne reste piégée dans les formes du soufflet.

Les poudres de combustible nucléaire sont très agressives, notamment pour les matériaux synthétiques tels que ceux utilisés pour la réalisation du soufflet et des joints d'étanchéité. Par conséquent, il est préférable de réduire les contacts directs entre le soufflet et la poudre. Le conduit 16 limite avantageusement ce contact.

De plus, dans le cas où un orifice d'évent est prévu, un conduit d'évent 44 est formé entre le conduit d'acheminement 16 et le soufflet 42 jusqu'à l'orifice d'évent.

Avantageusement, la bride de montage 46 protège l'extrémité amont du soufflet 42 vis-à-vis de la poudre.

De manière similaire, la bague d'étanchéité 14 recouvre l'extrémité aval du joint soufflet et s'interpose entre la poudre et le joint.

Des moyens sont également prévus pour assurer l'accostage de la bague 14 sur le col de la jarre. Avantageusement, on rapproche la jarre 4 de la bague d'étanchéité 14. En effet, de manière habituelle, la balance sur laquelle est disposée la jarre 4 comporte des moyens pour lever la jarre. Ainsi le dispositif de connexion est simplifié et utilise les moyens déjà existants.

Sur la figure 2A, on peut aussi voir des moyens mécaniques 56, de type vérin électrique, pour abaisser et lever la deuxième partie II. On peut également envisager à la fois d'abaisser la deuxième partie II et de lever la jarre.

Nous allons maintenant expliquer la mise en place du dispositif de connexion 2 sur le col 8 de jarre dans le cas où l'on déplace le dispositif de connexion 2 selon la présente invention.

La jarre 4 est mise en place en dessous du dispositif de connexion 2.

La deuxième partie II est abaissée par rapport à la trémie collectrice 10. La bague support 18 et le conduit d'acheminement 16 coulissent donc le long de la trémie 10, le joint 40 frottant sur la face intérieure du conduit 16 et assurant l'étanchéité. La bague d'étanchéité se rapproche du col 8 de la jarre 4.

Après une certaine course, la face d'appui de la bague d'étanchéité 16 vient en contact avec le col de la jarre. La bague support 18 poursuit sa course jusqu'à ce que les doigts 24 se dégagent de l'épaulement 32 de la bague d'étanchéité 16. La bague d'étanchéité 16 est alors libérée, elle repose sur le col et écrase par gravité le joint à lèvre 30 sur le col 8 de jarre assurant un contact étanche, comme cela est visible sur les figures 2A et 2B (joint écrasé). Sur la figure 1, le joint à lèvre 30 est à l'état non écrasé.

A ce moment-là, le dispositif de connexion 2 est déployé et assure une connexion étanche entre la zone d'alimentation en poudre et la jarre 4. Le système est prêt au remplissage de la jarre 4.

Il n'est pas nécessaire que le dispositif de connexion soit complètement déployé, i.e. que la première pièce 12 soit dans une position abaissée extrême comme représentée sur les figures 2A et 2B. En effet, l'étanchéité entre le dispositif et la jarre est assurée par le poids de la bague d'étanchéité 14.

Cependant, on s'assure que la première pièce 12 soit en appui sur la trémie collectrice 10, plus particulièrement que les surfaces 27 et 29 soient en contact pour assurer une répétabilité de la valeur d'écrasement du soufflet, garantissant ainsi un effort dû à la rémanence du soufflet identique à chaque accostage. Par ailleurs, ce contact métal-métal assure une étanchéité supplémentaire.

Lors du remplissage, la poudre s'écoule dans la trémie collectrice 10, puis dans le conduit de cheminement 16 et atteint le col 8 de jarre. L'air contenu dans la jarre est évacué par le passage d'évent ou remonte dans la trémie.

L'écoulement de la poudre s'effectue de manière étanche grâce au joint à lèvre 30 écrasé sur le col 8 de jarre, au soufflet 42 entre la bague support 18 et la bague d'étanchéité 14 et le joint 40 entre la trémie 10 et la bague support 18. Le confinement de la poudre est obtenu sans recourir à un système d'aspiration. Par conséquent, le problème de la gestion des filtres encrassés ne se pose plus. Par ailleurs, il n'y a aucun risque de dysfonctionnement au niveau de l'étanchéité puisqu'elle est obtenue par des éléments statiques.

De plus, l'alimentation en poudre est généralement obtenue par l'intermédiaire de couloirs vibrants (non représentés). Grâce au découplage mécanique entre la trémie collectrice 10 et la jarre 4 obtenu grâce au soufflet, les vibrations produites ne sont pas transmises à la jarre et donc à la balance. Les étapes de pesée ne sont pas faussées.

En outre, le positionnement relatif de la jarre 4 et du dispositif de connexion 2 ne requiert pas une grande précision. Seul le dégagement des doigts par rapport à l'épaulement est requis.

Le dispositif selon la présente invention offre donc une grande sécurité de fonctionnement et est d'un entretien aisé.

Le retrait de la jarre s'effectue ne relevant la première pièce 12 qui, au-delà d'une certaine course, rencontre les doigts 24, ce qui soulève la bague d'étanchéité 16, celle-ci s'écarte du col de la jarre. Le levage de la première pièce 12 peut se faire sur une grande course, ce qui permet d'éloigner suffisamment la bague d'étanchéité de la jarre, la jarre peut alors être aisément retirée de la balance pour être évacuer par un convoyeur.

La coopération des doigts 24 et de l'épaulement 32 permet avantageusement de supporter la bague d'étanchéité 14 lorsque la bague d'étanchéité 14 ne repose pas sur le col 8 de la jarre. Cependant, on pourrait prévoir d'utiliser le soufflet étanche 42 pour supporter la bague d'étanchéité 14. Ceci a pour avantage de simplifier le dispositif de connexion 2. Cependant, dans ce cas, le soufflet 42 est sollicité en traction pendant toutes les phases de repos, sa durée de vie peut en être réduite.

Nous allons maintenant expliquer une étape de remplissage d'une jarre dans l'objectif de fabriquer des pastilles de MOX.

Le mélange utilisé pour fabriquer des pastilles de MOX comprend du PuO₂, de l'UO2 et de la chamotte.

Un remplissage comporte les étapes suivantes :
- le pesage de la jarre 4 vide,
- la descente de la partie mobile II jusqu'à ce que la bague d'étanchéité repose sur le col 8 de jarre et que les doigts 24 se soient écartés de l'épaulement 32,
- le pesage de l'ensemble formé par la jarre 8 vide et la bague d'étanchéité 14,
- le remplissage avec de la chamotte, simultanément la quantité de chamotte mise dans la jarre est pesée,
- la remontée de la partie II de sorte à écarter la bague d'étanchéité 14 du col 8 de jarre,
- le pesage de la jarre 4 contenant la chamotte, si la masse de chamotte correspond à la valeur souhaitée, on passe au remplissage avec le PuO₂ et l'UO₂, sinon on ajuste la masse de chamotte, en remettant en place la bague d'étanchéité 14,
- ensuite, la bague d'étanchéité est remise en place sur le col de jarre,
- on ajoute ensuite le PuO₂ ou l'UO₂, simultanément la quantité d'oxyde mise dans la jarre est pesée,
- de nouveau on remonte de la partie II de sorte à écarter la bague d'étanchéité 14 du col 8 de j arre,
- on pèse la jarre contenant la chamotte et l'oxyde, si la masse d'oxyde correspond à la valeur souhaitée, on passe au remplissage avec l'autre oxyde, sinon on ajuste la masse dudit oxyde en remettant en place la bague d'étanchéité 14,
- la bague d'étanchéité 14 est remise en place sur le col de jarre, le dernier oxyde est amené dans la jarre, simultanément la quantité d'oxyde mise dans la jarre est pesée,
- de nouveau on remonte de la partie II de sorte à écarter la bague d'étanchéité 14 de la jarre 4,
- on pèse la jarre 4 contenant la chamotte et les oxydes, si la masse de l'autre oxyde correspond à la valeur souhaitée, le remplissage est terminé sinon on ajuste la masse dudit oxyde en remettant en place la bague d'étanchéité 14.

Comme mentionné ci-dessus, l'acheminement des poudres de leur réservoir jusqu'au dispositif de connexion est généralement obtenu au moyen de conduits mis en vibration, appelés couloirs vibrants.

Afin de respecter les cadences de remplissage tout en assurant les précisions de dosage, les couloirs vibrants sont pilotés en grande vitesse, pour délivrer une masse de poudre M' = M - ∧, M étant la masse de poudre désirée et ∧ étant une masse faible de poudre manquante.

Lorsque la balance détecte que la masse M' est atteinte, le système de pilotage du couloir réduit la vitesse qui passe à une vitesse moyenne, puis à une vitesse faible jusqu'à ce que la balance détecte que la masse M est atteinte. A ce moment-là, le couloir vibrant est arrêté.

Ce cycle de commande d'un couloir vibrant est similaire pour chaque couloir vibrant reliant les réservoirs de chamotte, de PuO₂ et d'UO2 à la trémie collectrice.

Le dispositif de connexion offre une maintenance simplifiée. Le remplacement du soufflet 42 est facilité. En effet, il suffit de désolidariser la bride de montage 46 de la première pièce 12 par rotation, puis de séparer la bague d'étanchéité 14 et la bride de montage 46 du soufflet 42 en retirant les colliers de serrage 48, 50. Préférentiellement, avant de désolidariser la bride 46 de la première pièce 12, on solidarise la bride 46 et la bague d'étanchéité 14 après les avoir rapprochés, par exemple par un axe transversal. Le soufflet 42 est comprimé et ne risque pas d'être endommagé par élongation sous la charge de la bague d'étanchéité 30.

Le soufflet 42 est ensuite géré comme déchet radioactif et la bague d'étanchéité 14 et la bride de montage 46 sont remontées sur un nouveau soufflet 42, qui est ensuite remis en place dans le dispositif de connexion.

Les moyens d'arrêt axial entre la première pièce 12 et la bague d'étanchéité 14, dans l'exemple représenté, sont de réalisation simple et de fonctionnement fiable. Cependant, des moyens d'arrêt plus élaborés peuvent être mis en oeuvre, prévoyant par exemple le déplacement de pièces.

## Revendications

1. Dispositif de connexion étanche entre un système d'alimentation en matériaux pulvérulents ou granulaires et un récipient muni d'un orifice de remplissage, ledit dispositif comportant :
- une partie de connexion fixe (I) destinée à être raccordée au système d'alimentation,
une partie de connexion mobile (II) par rapport à la partie de connexion fixe (I) destinée à être raccordée à l'orifice de remplissage du récipient (4), la partie de connexion mobile (II) comportant au niveau d'une extrémité aval au moins un moyen d'étanchéité (30) pour réaliser une connexion étanche par contact avec les contours de l'orifice de remplissage et l'extrémité aval de la partie de connexion mobile (II) étant raccordée à la partie de connexion fixe (I) par des moyens étanches (42) et souples de sorte à assurer un découplage mécanique entre l'extrémité aval de la partie de connexion mobile (II) et la partie de connexion fixe (I), la partie de connexion mobile comportant une première pièce (12) formant support et une deuxième pièce (14) formant l'extrémité aval de la partie de connexion mobile et portant le moyen d'étanchéité (30), **caractérisé en ce que** ledit dispositif de connexion comporte également des moyens (22, 24, 32) pour limiter le déplacement en éloignement de la deuxième pièce (14) par rapport à la première pièce (12), lesdits moyens étant actifs lorsque la deuxième pièce (14) n'est pas en contact avec le contour de l'orifice de remplissage et étant inactifs lorsque la deuxième pièce (14) est en contact avec le contour de l'orifice de remplissage.

2. Dispositif de connexion étanche selon la revendication 1, dans lequel les moyens de limitation (22, 24, 32) comportent des doigts radiaux (24) et un épaulement (32) en amont des doigts (24) de sorte que, lorsque la deuxième pièce (14) entre en contact avec le contour de l'orifice de remplissage, l'épaulement (32) et les doigts (24) s'écartent.

3. Dispositif de connexion étanche selon la revendication 1 ou 2, dans lequel la partie de connexion fixe (I) forme une trémie collectrice (10) des matériaux et dans lequel la première pièce de la partie de connexion mobile (II) comporte une bague support (18) montée coulissante de manière étanche autour de la trémie collectrice (10) et dans lequel la deuxième pièce (14) forme une bague d'étanchéité (14), la bague d'étanchéité (14) et la bague support (18) étant connectées par un soufflet étanche (42) assurant le découplage mécanique entre la partie de connexion fixe (I) et l'extrémité aval de la partie de connexion mobile (II).

4. Dispositif de connexion étanche selon la revendication 3, dans lequel les moyens d'étanchéité (30) portés par la bague d'étanchéité (14) sont formés par un joint à lèvre monté dans une gorge.

5. Dispositif de connexion étanche selon la revendication 3 ou 4, dans lequel la bague support (18) se prolonge par un conduit d'acheminement (16) en direction de bague d'étanchéité (14).

6. Dispositif de connexion selon la revendication 5, dans lequel des moyens d'étanchéité (40) sont prévus entre le conduit d'acheminement (16) et la trémie collectrice (10) pour assurer un coulissement étanche.

7. Dispositif de connexion étanche selon l'une des revendications 3 à 6, comportant des moyens (56) pour faire coulisser axialement la bague support par rapport à la partie de connexion fixe, par exemple de type vérin électrique.

8. Dispositif de connexion étanche selon l'une des revendications 3 à 7, dans lequel le soufflet (42) est monté sur la bague support (18) au moyen d'une bride de montage (46), et les extrémités amont et aval du soufflet (42) sont fixés sur la bride de montage (46) et sur la bague d'étanchéité (14), respectivement, au moyen de colliers de serrage (48, 50).

9. Dispositif de connexion étanche selon la revendication 8, dans lequel la bride de montage (46) est solidarisée axialement à la bague support (18) par un système à baïonnette.

10. Dispositif de connexion étanche selon l'une des revendications 5 à 9, comportant un orifice d'évent dans la bague support et communiquant avec l'intérieur de la jarre par un passage délimité entre le soufflet (42) et le conduit d'acheminement (16).

11. Système de remplissage comportant des conduits d'alimentation en matériaux pulvérulents ou granulaires, un dispositif de connexion étanche selon l'une des revendications 1 à 10, et un dispositif de pesée supportant le récipient, les conduits d'alimentation étant raccordés à la partie de connexion fixe.

12. Système de remplissage selon la revendication 11, dans lequel les conduits d'alimentation sont du type couloir vibrant.

13. Système de remplissage selon la revendication 12, dans lequel les couloirs vibrants sont commandés de sorte à délivrer les matériaux avec une vitesse élevée au début du remplissage, puis à délivrer les matériaux à des vitesses plus faibles lorsque la quantité délivrée est proche de la quantité souhaitée.

14. Système de remplissage selon la revendication 11 ou 12, dans lequel le système de pesée est apte à rapprocher l'orifice de remplissage du récipient du dispositif de connexion étanche.

15. Système de remplissage de jarres selon l'une des revendications 11 à 14, avec un mélange de matériaux pulvérulents comprenant de l'oxyde d'uranium et/ou de l'oxyde de plutonium ou leur mélange et destinés à la réalisation de combustible nucléaire.

16. Procédé de remplissage d'un récipient au moyen du système de remplissage d'un récipient selon l'une des revendications 11 à 15, comportant les étapes :
- mise en place du récipient en dessous du dispositif de connexion étanche,
- pesage du récipient,
- rapprochement du dispositif de connexion étanche de l'orifice de remplissage du récipient,
- mise en contact de la bague d'étanchéité et du contour de l'orifice de remplissage de sorte à réaliser une connexion étanche,
- pesage de l'ensemble formé par le récipient et la bague d'étanchéité,
- arrivée du ou des matériaux.

17. Procédé de remplissage selon la revendication précédente, dans lequel entre chaque remplissage par un matériau, la bague d'étanchéité est écartée du contour de l'orifice de remplissage et le récipient avec son contenu est pesé.

## Patentansprüche

1. Vorrichtung zur dichten Verbindung zwischen einem System zur Versorgung mit pulverförmigen oder granularen Materialien und einem Behälter, der mit einer Füllöffnung ausgestattet ist, wobei die Vorrichtung umfasst:
- ein festes Verbindungsteil (I), das dazu ausgelegt ist, mit dem Versorgungssystem verbunden zu sein,
- ein bezüglich des festen Verbindungsteils (I) bewegliches Verbindungsteil (II), das dazu ausgelegt ist, mit der Füllöffnung des Behälters (4) verbunden zu sein, wobei das bewegliche Verbindungsteil (II) im Bereich eines stromabwärtigen Endes wenigstens ein Abdichtungsmittel (30) umfasst, um eine dichte Verbindung durch Kontakt mit den Konturen der Füllöffnung zu realisieren, und wobei das stromabwärtige Ende des beweglichen Verbindungsteils (II) mit dem festen Verbindungsteil (I) durch dichte und flexible Mittel (42) derart verbunden ist, dass eine mechanische Entkopplung zwischen dem stromabwärtigen Ende des beweglichen Verbindungsteils (II) und dem festen Verbindungsteil (I) gewährleistet ist, wobei das bewegliche Verbindungsteil ein erstes Stück (12) umfasst, das einen Träger bildet, und ein zweites Stück (14), das das stromabwärtige Ende des beweglichen Verbindungsteils bildet und das Abdichtungsmittel (30) trägt, **dadurch gekennzeichnet, dass** die Verbindungsvorrichtung ferner Mittel (22, 24, 32) zur Begrenzung der sich entfernenden Verlagerung des zweiten Stücks (14) bezüglich des ersten Stücks (12) umfasst, wobei die Mittel aktiv sind, wenn das zweite Stück (14) nicht in Kontakt mit der Kontur der Füllöffnung ist, und inaktiv sind, wenn das zweite Stück (14) in Kontakt mit der Kontur der Füllöffnung ist.

2. Vorrichtung zur dichten Verbindung nach Anspruch 1, bei der die Begrenzungsmittel (22, 24, 32) radiale Finger (24) und eine Schulter (32) stromaufwärts der Finger (24) derart umfassen, dass dann, wenn das zweite Stück (14) in Kontakt mit der Kontur der Füllöffnung gelangt, die Schulter (32) und die Finger (24) sich entfernen.

3. Vorrichtung zur dichten Verbindung nach Anspruch 1 oder 2, bei der das feste Verbindungsteil (I) einen Sammeltrichter (10) für die Materialien bildet, und wobei das erste Stück des beweglichen Verbindungsteils (II) einen Stützring (18) umfasst, der abdichtend verschiebbar um den Sammeltrichter (10) herum montiert ist, und wobei das zweite Stück (14) einen Dichtring (14) bildet, wobei der Dichtring (14) und der Stützring (18) durch einen dichten Balg (42) verbunden sind, der die mechanische Entkopplung zwischen dem festen Verbindungsteil (I) und dem stromabwärtigen Ende des beweglichen Verbindungsteils (II) gewährleistet.

4. Vorrichtung zur dichten Verbindung nach Anspruch 3, wobei die Abdichtungsmittel (30), die durch den Dichtring (14) getragen werden, durch eine Lippendichtung gebildet sind, die in einer Rille montiert ist.

5. Vorrichtung zur dichten Verbindung nach Anspruch 3 oder 4, wobei der Stützring (18) durch eine Förderleitung (16) in Richtung des Dichtrings (14) verlängert ist.

6. Vorrichtung zur Verbindung nach Anspruch 5, wobei die Abdichtungsmittel (40) zwischen der Förderleitung (16) und dem Sammeltrichter (10) vorgesehen sind, um eine dichte Verschiebung zu gewährleisten.

7. Vorrichtung zur dichten Verbindung nach einem der Ansprüche 3 bis 6, umfassend Mittel (56) zum achsialen Verschieben des Stützrings bezüglich des festen Verbindungsteils, beispielsweise vom Typ elektrischer Zylinder.

8. Vorrichtung zur dichten Verbindung nach einem der Ansprüche 3 bis 7, wobei der Balg (42) an dem Stützring (18) mittels eines Montageflansches (46) montiert ist, und das stromaufwärtige und das stromabwärtige Ende des Balgs (42) an dem Montageflansch (46) beziehungsweise an dem Dichtring (14) mittels Spannschellen (48, 50) befestigt sind.

9. Vorrichtung zur dichten Verbindung nach Anspruch 8, wobei der Montageflansch (46) achsial mit dem Stützring (18) durch ein Bayonettsystem verbunden ist.

10. Vorrichtung zur dichten Verbindung nach einem der Ansprüche 5 bis 9, umfassend eine Lüftungsöffnung in dem Stützring, die mit dem Inneren des Behälters mittels eines Durchgangs in Verbindung ist, welcher zwischen dem Balg (42) und der Förderleitung (16) begrenzt ist.

11. Füllsystem, umfassend Leitungen zur Versorgung mit pulverförmigen oder granularen Materialien, eine Vorrichtung zur dichten Verbindung nach einem der Ansprüche 1 bis 10 sowie eine Wiegevorrichtung, die den Behälter trägt, wobei die Versorgungsleitungen an das feste Verbindungsteil angeschlossen sind.

12. Füllsystem nach Anspruch 11, wobei die Versorgungsleitungen vom Typ Schüttelrinne sind.

13. Füllsystem nach Anspruch 12, bei dem die Schüttelrinnen derart gesteuert sind, dass die Materialien zu Beginn der Füllung mit erhöhter Geschwindigkeit geliefert werden und die Materialien dann mit niedrigeren Geschwindigkeiten geliefert werden, wenn die gelieferte Menge nahe der gewünschten Menge ist.

14. Füllsystem nach Anspruch 11 oder 12, bei dem das Wiegesystem dazu ausgelegt ist, die Füllöffnung des Behälters an die Vorrichtung zur dichten Verbindung anzunähern.

15. System zum Füllen von Behältern nach einem der Ansprüche 11 bis 14 mit einer Mischung von pulverförmigen Materialien, umfassend Uranoxid und/oder Plutoniumoxid oder ihre Mischung, und das für die Herstellung von Kernbrennstoff bestimmt ist.

16. Verfahren zum Füllen eines Behälters mithilfe des Systems zum Füllen eines Behälters nach einem der Ansprüche 11 bis 15, umfassend die Schritte:
- Platzieren des Behälters unter der Vorrichtung zur dichten Verbindung,
- Wiegen des Behälters,
- Annähern der Vorrichtung zur dichten Verbindung an die Füllöffnung des Behälters,
- Inkontaktbringen des Dichtrings und der Kontur der Füllöffnung derart, dass eine dichte Verbindung realisiert wird,
- Wiegen der durch den Behälter und den Dichtring gebildeten Gesamtheit,
- Zufuhr des oder der Materialien.

17. Verfahren zum Füllen nach dem vorhergehenden Anspruch, wobei zwischen jeder Füllung mit einem Material der Dichtring von der Kontur der Füllöffnung entfernt wird und der Behälter mit seinem Inhalt gewogen wird.

## Claims

1. A device for tight connection between a system for feeding with powdery or granular materials and a container fitted with a filling orifice, where the said device includes:
- a stationary connection portion (I) intended to be connected to the feed system,
- a connection portion (II) which moves relative to the stationary connection portion (I) intended to be connected to the filling orifice of the container (4), the moving connection portion (II) including in the area of a downstream end at least one sealing means (30) to accomplish a tight connection by contact with the contours of the filling orifice and the downstream end of the moving connection portion (II) being connected to the stationary connection portion (I) by flexible sealing means (42) such that they can provide mechanical disengagement between the downstream end of the moving connection portion (II) and the stationary connection portion (I), the moving connection portion comprising a first part (12) forming a support and a second part forming a downstream end of the moving connection portion and supporting the sealing means (30), **characterized in that** the connection device also comprises means (22, 24, 32) to limit the movement of the second part (14) away from the second part (12), said means being active when the second part (14) is not in contact with the contour of the filling orifice, and being inactive when the first part (14) is in contact with the contour of the filling orifice.

2. A tight connection device according to claim 1, in which the means of limitation (22, 24, 32) include radial pins (24) and a shoulder (32) upstream from the pins (24) such that, when the second part (14) comes into contact with the contour of the filling orifice the shoulder (32) and the pins (24) separate.

3. A tight connection device according to claim 1 or 2, in which the stationary connection portion (I) forms a hopper (10) collecting the materials, and in which the first part (12) of the moving connection portion (II) includes a supporting ring (18) assembled in sliding and tight fashion around the collecting hopper (10) and in which the second part (14) forms a seal ring, the seal ring (14) and the supporting ring (18) being connected by a tight bellows (42) providing the mechanical disengagement between the stationary connection portion (I) and the downstream end of the moving connection portion (II).

4. A tight connection device according to claim 3, in which the sealing means (30) supported by the seal ring (14) are formed by a lip seal assembled in a groove.

5. A tight connection device according to claim 3 or 4, in which the supporting ring (18) is extended by a pipe (16) conveying in the direction of the seal ring (14).

6. A tight connection device according to claim 5, in which there are sealing means (40) between the conveyance pipe (16) and the collecting hopper (10) to provide tight sliding.

7. A tight connection device according to one of the claims 3 to 6, including means (56) to cause the supporting ring to slide axially relative to the stationary connection portion, for example of the electric jack type.

8. A tight connection device according to one of the claims 3 to 7, in which the bellows (42) is assembled on the supporting ring (18) by means of an mounting flange (46), and the upstream and downstream ends of the bellows (42) are attached on the mounting flange (46) and on the seal ring (14), respectively, by means of clamp connections (48, 50).

9. A tight connection device according to claim 8, in which the mounting flange (46) is secured axially to the supporting ring (18) by a bayonet system.

10. A connection device according to one of the claims 5 to 9, including a ventilating aperture in the supporting ring, and communicating with the interior of the jar through a passage demarcated between the bellows (42) and the conveyance pipe (16).

11. A filling system including pipes for feeding with powdery or granular materials, a tight connection device according to one of the claims 1 to 10, and a weighing device supporting the container, where the feed pipes are connected to the stationary connection portion.

12. A filling system according to claim 11, in which the feed pipes are of the vibrating chute type.

13. A filling system according to claim 12, in which the vibrating chutes are operated so as to deliver the materials at high speed at the start of the filling, and then to deliver the materials at slower speeds when the delivered quantity is close to the desired quantity.

14. A filling system according to claim 11 or 12, in which the weighing system is able to bring the filling orifice of the container close to the tight connection device.

15. A jar-filling system according to one of the claims 11 to 14, with a mixture of powdery materials including uranium oxide and/or plutonium oxide or a mixture of these, and intended for the production of nuclear fuel.

16. A method of filling a container by means of the system for filling a container according to one of the claims 11 to 15, including the following steps:
- positioning of the container beneath the tight connection device,
- weighing of the container,
- bringing the tight connection device close to the container's filling orifice,
- bringing the seal ring into contact with the contour of the filling orifice in order to make a tight connection,
- weighing of the assembly formed by the container and the seal ring,
- arrival of the material or materials.

17. A filling method according to the claim 16in which, between each filling by a material, the seal ring is separated from the contour of the filling orifice and the container with its content is weighed.
